# EUROPEAN PATENT SPECIFICATION

(11) **EP 1 608 083 B1**
(45) Date of publication and mention of the grant of the patent: **15.03.2017**
(21) Application number: 04014262.2
(22) Date of filing: 17.06.2004
(51) Int. Cl.: H04B 7/08, H01Q 1/32, H01Q 3/24

(54) **Diversity with identification of specific antenna properties and evaluation thereof**
Diversitätsempfang mit Identifizierung und Evaluierung von spezifischen Antenneneigenschaften
Réception en diversité avec identification et évaluation de propriétés d'antenne spécifiques

(43) Date of publication of application: 21.12.2005
(60) Divisional application: 12186595.0
(73) Proprietor: Harman Becker Automotive Systems GmbH, 76307 Karlsbad (DE)
(72) Inventor: Zahm, Michael, 76337 Waldbronn (DE)
(74) Representative: Grünecker Patent- und Rechtsanwälte PartG mbB

(56) References cited:
- EP-A- 0 440 239
- EP-A1- 1 126 632
- WO-A-03/058847
- US-A1- 2003 125 078
- US-A1- 2004 038 714
- US-B1- 6 278 869

## Description

The present application concerns a mobile broadcast receiver to be used for the reception of broadcast signals in a vehicle.

As modern vehicles are being equipped with more broadcast reception equipment than just an FM radio, it becomes increasingly important to ensure good reception quality as well as flexibility of use of any equipment mounted in or attached to a car. Additionally to an FM radio, executive vehicles sport terrestrial broadcast TVs, analog as well as digital, and possibly also DAB receivers. As the frequency band and signals for all of these receivers is different, different reception antennas are required.

To attain the reception quality that viewers and listeners are accustomed to from their stationary home or work environment, diversity reception antennas are customarily employed in mobile broadcast reception systems. Diversity reception in this case normally implies spatial diversity. Another option is cross polarization diversity, since the space for antennas and their spacing is usually restricted in a vehicle.

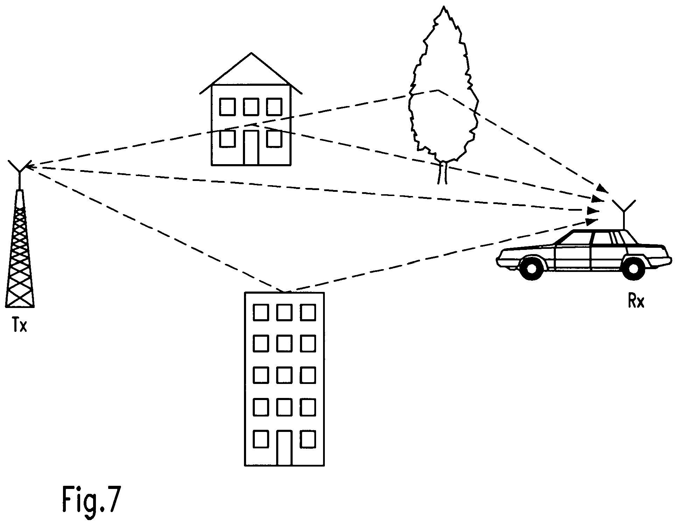

Diversity as employed in mobile reception systems mainly suffer from time varying multi-path fading with extremely different multi-path intensity profiles as illustrated for instance in Fig. 7. Multi-path fading arises in wireless broadcast as a result of reflections from stationary and non-stationary objects and is manifested as a random amplitude and phase modulation. At the receiver the multiple copies of the signal are summed together in either a constructive or destructive manner. The destructive addition of the signals creates fading dips in the signal power. The exact phase relationship and therefore the degree of cancellation will vary from position to position, making it possible for an antenna at location A to experience severe destructive cancellation and an antenna at location B to experience constructive addition. The distances involved depend upon the frequencies used for transmission and can be very small.

Diversity techniques aim to improve reception performance by allowing more than one antenna to be used with a common receiver. These antennas can be spatially separated by an appropriate distance or have different polarizations. Therefore selecting the best antenna on a dynamic basis provides a considerable operational advantage.

A fundamental aim of a diversity receiver is to select the best antenna to automatically and dynamically recover the highest possible signal quality. Multipath fading is especially an issue in OFDM transmission as utilized in Digital Video Broadcast (DVB). Fig. 7 shows a typical multi-path fading environment where the signal transmitted from the transmitter Tx is received by the receiver Rx directly, as well as after having been reflected off various objects such as a high rise block, a house and/or a tree, as depicted. These different signals received are not correlated. For many scattering environments spatial diversity is an effective way to improve the performance of wireless radio systems. The signals, of which there should be at least two received by the diversity antennas, are then switched between or combined in the receiver.

A standard diversity technique is maximum ratio combining in a receiver, which means that the signal is down-converted into the base band, demodulated and then combined to optimize the signal to noise ratio.

In switched diversity, one or the other of at least two antennas is selected and one of the antennas remains selected until the received signal strength falls below some limit of acceptability. At this point, the other antenna is switched to and this process is repeated.

EP-B-0 517 196 describes a space diversity TV broadcast receiver in a vehicle that can detect whether an antenna is connected or not, and subsequently chooses the best signal of the connected antennas. The video signal only includes the signals from the actually connected antennas, which means that harsh noise is effectively suppressed. The harsh noise would result from the inclusion of a lacking portion of the video or audio signal resulting from the antenna connector signal during a specific period when one of the antennas is not connected. In practice, an antenna connection detection portion is included in between the respective antenna and a tuner, and an unoccupied antenna connector detecting portion outputs a signal to a signal selecting controller which also feeds back into the tuner. In this way it is ascertained that only the signals from connected antennas are compared and can be selected.

Therefore, the solutions so far are restricted to a particular frequency band and to finding out whether an antenna is connected or not.

US 2003/0125078 A1 discloses a diversity apparatus and method for a mobile communication terminal with a GPS function. The diversity apparatus comprises two multi-band antennas with reception polarisation characteristics for receiving a combined signal of a GPS signal and a mobile communication signal. A switching diversity unit (340) selects one of the two signals received by the multi-band antennas.

US 6 278 869 B1 describes a radio system for a remote control operation in a stationary vehicle. It includes a transmitter outside of the vehicle which transmits a signal designed to be received only by the receiver located in the vehicle in a predetermined radio channel. At least two receiving antennas mounted on the vehicle are included, and these are decoupled from each other in a diversity type manner. With the help of a selection circuit, each one of these antennas is connected to the receiver sequentially.

EP 0 440 239 A2 describes an antenna selection diversity reception apparatus. This detects the level of a TDM burst and decides on the basis of the detected level to use the antenna election diversity method or another selection criterion.

WO 03/058847 A1 discloses an antenna and frequency diversity receiving apparatus that has n antennas and can have m receiving frequencies. The best antenna frequency combinations are assigned an IF stage. A quality signal representing the receiving quality is generated for each of the n x m possible antenna frequency within the IF. A digital signal processor determines the best antenna frequency combination by comparison and the selected antenna are switched to the digital signal processor (DS) and the assigned IF stage is tuned to the determined receiving frequency.

EP 1 126 632 discloses a receiver having at least two television channel selection devices for converting high frequency signals into intermediate frequency signals, at least two video demodulation devices for converting intermediate frequency signals into picture signals, at least two audio demodulation devices for converting intermediate frequency signals into sound signals, an intermediate frequency switching device for switching the audio and video demodulation devices to the television channel section devices, and at least two receiver antennae for providing high-frequency signals and a high-frequency switching device for switching the receiver antenna to the television channel selection devices.

It is an object of the present invention to make the selection of one of the diversity antennas as efficient as possible and be able to adapt the solution found to a variety of practical situations that can arise regarding diversity reception in a vehicle.

This object is solved by the subject-matter of the independent claims advantageous embodiments are defined in the dependent claims. This object is solved by the independent claim. Further advantageous embodiments are defined in the dependent claims.

An advantage of the solution of the present invention is that the best reception signal is automatically selected by the mobile broadcast receiver without any human intervention or prolonged waiting time.

A further advantage of the mobile broadcast receiver of the current invention is that it can be employed with different kinds of receive diversity. These can include spatial diversity, cross-polar diversity and/or frequency diversity. This means that the use of the mobile broadcast receiver is not restricted by the antenna and/or antenna diversity design.

The mobile broadcast receiver can also determine the diversity antenna circuit identifications, which has the advantage that the mobile broadcast receiver can immediately adapt to the correct antenna, frequency and modulation.

In a preferred embodiment the mobile broadcast receiver comprises a plurality of detectors each determining the operational characteristics of the antenna connected to it, which has the advantage that the detectors can be kept simple.

This lack of complexity simplifies the design of the mobile broadcast receiver as well as making it fairly robust.

Having only one detector in the mobile broadcast receiver that is connected to the plurality of external diversity antennas through a multiplexer has the advantage that only one detector is necessary and therefore the number of components is kept low. This means that there are less components that can develop a fault, therefore making the mobile broadcast receiver more reliable.

It is advantageous for the mobile broadcast receiver to comprise an antenna impedance detection unit, an antenna directionality determination unit and a unit for determining an antenna frequency bandwidth, as these operational characteristics are necessary to establish which antenna should be selected for the reception of the broadcast signal.

Using resistors, current sources or voltage sources as coding means for antennas has the advantage of being a simple solution to the inherently quite complex problem of how to let the mobile broadcast receiver know which antennas are actually connected.

In a preferred implementation the tuning means is adapted for the reception of analog broadcast signals, like FM, VHF and UHF, as these are the most common distribution signals for broadcast transmissions.

According to another preferred embodiment the tuning means within the mobile broadcast receiver can receive a digital signal, like DAB, DVB-H and DVB-T, as the broadcast transmitters are being switching over to these digital standards in the near to medium term future.

It is advantageous to the mobile broadcast receiver to comprise a plurality of tuners, each assigned to a specific frequency band as this increases the flexibility of the mobile broadcast receiver.

The mobile broadcast receiver has the advantage that its tuning means can be a Software Defined Radio. This has the advantage of making the mobile broadcast receiver more flexible regarding the reception of signals from different frequency bands and standards.

The present invention will now be described by way of example only with reference to the attached Figures, wherein:
Fig. 1 is a block diagram showing a mobile broadcast receiver;
Fig. 2 is a block diagram of another mobile broadcast receiver;
Fig. 3 shows a block diagram of a further mobile broadcast receiver;
Fig. 4 shows a block diagram of a mobile broadcast system in accordance with an embodiment of the present invention;
Fig. 5 shows a block diagram of a further mobile broadcast system;
Fig. 6 shows a flow-chart of the process of selecting an external diversity antenna;
Fig. 7 is an illustration of multi-path fading; and
Fig. 8 is a block diagram of a further mobile broadcast receiver.

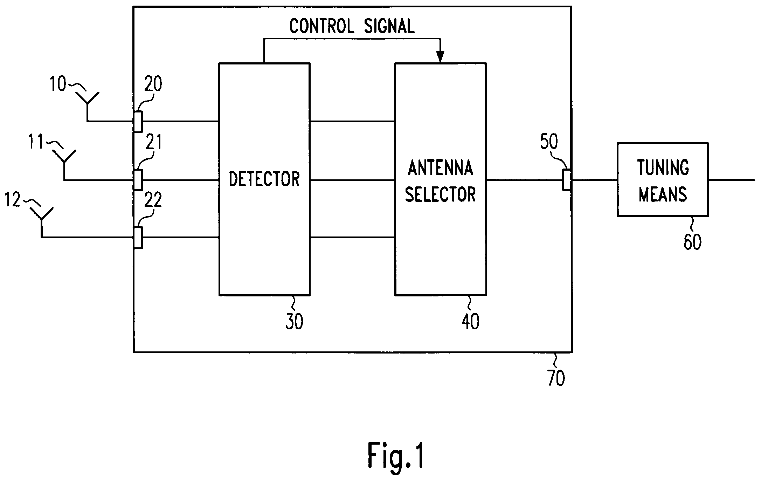

The block diagram of Fig. 1 shows a schematic view of a mobile broadcast receiver. The broadcast signal is received by at least one of the external diversity antennas 10, 11, 12 which are connected to the mobile broadcast receiver through the antenna connectors 20, 21, 22. The detector 30 detects the operational characteristics of the antennas 10, 11, 12 and outputs a control signal to the antenna selector 40. The received broadcast signal is also transmitted from the detector 30 to the antenna selector 40. The antenna selector 40 selects the signal from at least one of the antennas 10, 11, 12 and outputs the selected signal through signal output 50 to tuning means 60, where the received broadcast signal is turned into the visual TV signal and/or audible radio signal.

Fig. 1 is an example configuration in as far as less than the three antennas 10, 11,12 shown can be connected to the mobile broadcast receiver 70 and of course more than the three antennas 10, 11, 12 shown can be connected to the mobile broadcast receiver 70 as well. The number of antenna connectors 20, 21, 22 of the mobile broadcast receiver 70 is adjusted accordingly.

The antennas 10, 11, 12 can be frequency selective antennas for a specific frequency and like e.g. FM, VHF, UHF, DAB or DVB or they could be broadband antennas for any combination of those frequency bands or even covering the whole frequency range for broadcast reception. It is also possible that for example antennas 10 and 11 cover the same frequency band and provide spatial diversity for the mobile broadcast receiver 70. For this purpose, they should ideally be spaced at multiples of the wavelength.

The antennas 10, 11, 12 could conceivably also be cross polarized antennas meaning that the resulting diversity is polarization diversity. Frequency diversity can also be employed.

There is a multitude of different reception antennas available for the vehicle market these days. This includes four-way diversity car antennas in a whip style for roof installation, as well as windscreen mounted cable antennas with two-way diversity for the FM, VHF and UHF bands. Roof antennas may also include analog periodic antennas over a metallic reflector. An issue for windscreen antennas is that they should be as unobtrusive as possible and it is therefore aimed to make them from transparent conductors. It can be expected, however, that a significant performance loss will occur in this case due to the appreciable conductor resistivity.

The most popular antenna diversity technique is spatial diversity, in which the antennas differ by their spatial location. Having the antennas at different locations means that when one of the antennas receives a dip in the signal, the other might well receive a maximum. Therefore having the choice of these two signals means that the reception quality is improved over that of just one antenna reception.

Cross-polar diversity antennas make use of the fact that in a multi-path environment the broadcast signal is reflected of many different obstacles, some of which will change the polarity of the signal. The different reflectors are probably made of different materials, for example concrete in high-rise blocks, organic matter on trees and the metal of cars and lorries, and therefore their reflective properties differ. These different reflective properties can induce a change of polarization in the reflected signal. On reception with a single polarized antenna this would mean that a signal with a lesser amplitude would be received, and therefore the effect of noise or interference would be much greater. With a cross-polarized antenna the signals of the two polarizations can be utilized and therefore the best signal selected or the two signals can be combined.

In today's very crowded wireless world, frequency diversity can also be employed, making use of the fact that sometimes the same program is broadcast in two different frequency bands. Since any two different frequencies experience different multipath fading, it is very useful to be able to receive these two different frequencies. When one frequency might experience destructive interference the reception at the other frequency might be fine. Again, the best signal is chosen by the antenna selector 40 for further processing in the tuning means 60.

The detector 30 analyses the signals received through the antenna 10, 11, 12 through the connectors 20, 21, 22 to establish the relevant antenna characteristics. These can include the antenna impedance, the antenna directionality, the antenna frequency bandwidth of operation and others, as well as information on the antenna matching circuitry.

The detector 30 uses the information thus gained to transmit a control signal to the antenna selector 40 with information on the relevant antenna characteristics. The antenna selector 40 uses this control signal received from the detector 30 as well as other quality indications to choose the signal from the best antenna 10, 11 or 12, in for example, switched diversity. It is, however, also conceivable that maximum ratio combining is used here.

Only one signal is then output through the connector 50 to the tuning means 60 for further processing. These tuning means could include tuners for any of the following signals: FM, VHF, UHF, DAB and DVB. Which of these tuning means is employed depends on the signal received and therefore which antenna was selected by the antenna selector 40.

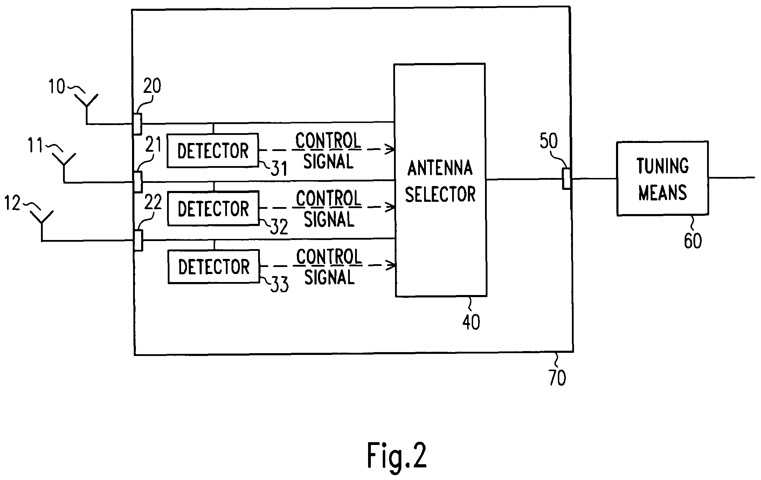

Fig. 2 shows a particular embodiment of the mobile broadcast receiver 70, in which the same elements as in Fig. 1 are denoted with the same reference signs. Here a signal is received by the external diversity antennas 10, 11, 12, and input to the mobile broadcast receiver 70 through the connector 20, 21, 22, respectively. Each of these input signals then has its own detector 31, 32, 33, which detects the operational antenna characteristics as described for Fig. 1 above. Each detector 31, 32, 33 sends a control signal to the antenna selector 40 which selects the antenna 10, 11, 12 as described in Fig. 1 above. The best signal is then output through connector 50 to the tuning means 60 for further processing.

In this embodiment each detector 31, 32, 33 is only responsible for the signal coming from one of the antennas 10, 11, 12, respectively. This means that under certain circumstances the detector 31, 32, 33 could be simplified for dealing with specific antenna characteristics only. Each detector 31, 32, 33, will measure the matching circuitry characteristics and the possible coding at the beginning of every cycle, which means when the mobile broadcast receiver 70 is turned on or when the frequency band in the tuning means 60 is switched. The operational characteristics of the antenna 10, 11, 12 is constantly monitored by the detector 31, 32, 33, and a control signal sent to the antenna selector 40.

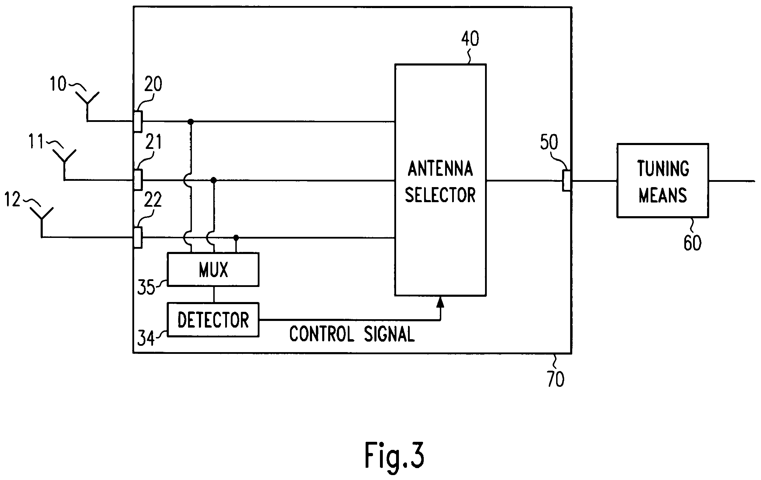

Fig. 3 shows a block diagram of a mobile broadcast receiver where there is one detector 34 for determining the antenna 10, 11, 12 characteristics and matching circuit characteristics of all antennas 10, 11, 12. To achieve this, the signal is received by the antennas 10, 11, 12 and input into the mobile broadcast receiver 70 through the connectors 20, 21, 22, where the signals are multiplexed in the multiplexer 35 before the characteristics are determined in the detector 34, which in turn sends a control signal to the antenna selector 40. The chosen signal is then output through the connector 50 to the tuning means 60.

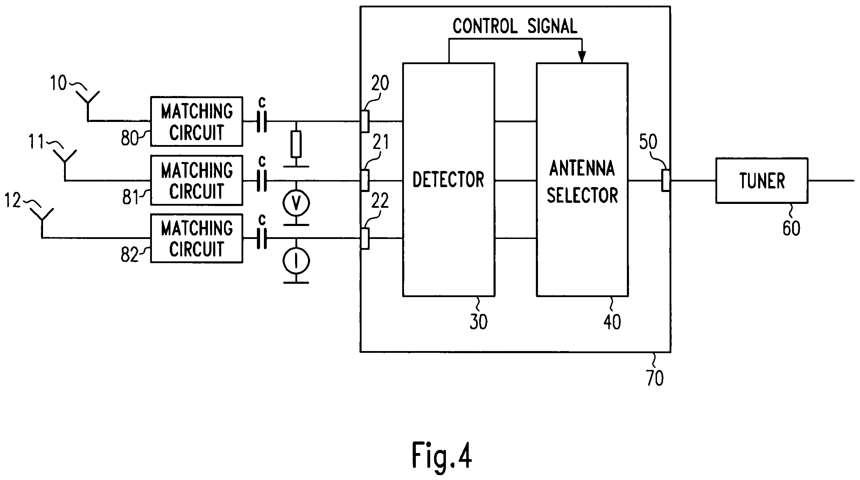

Therefore the detector 34 has to be able to cope with the range of frequencies received by the antennas 10, 11, 12 and be able to determine all possible antenna and matching circuitry characteristics. This means that the detector 34 receives FM, VHF, UHF, DAB and DVB signals. Within these frequency bands there is a possibility for several different antennas and combinations of antennas for diversity possible. Therefore, there is also a plurality of possibilities regarding the matching circuitry which are explained in more detail with reference to Fig. 4.

The multiplexer 35 ensures that the detector 34 deals with one signal at a time. This has the advantage that only one detector 34 is required, but the complexity of this detector 34 is possibly higher than that of detectors 31, 32, 33 in Fig. 2. For the antenna selector 40, this also means that it only receives one control signal from detector 34, which reduces its complexity.

The mobile broadcast receiver 70 depicted in Fig. 4 is the same as that of Fig. 1 and therefore its detailed description is omitted here for reasons of brevity. The same references are used for the same elements. Fig. 4 shows more detail on the possible configurations for antenna matching circuits 80, 81, 82 and the coding that can be introduced.

The block diagram in Fig. 4 shows how a capacitor C is used to decouple the antenna 10, 11, 12 and matching circuit 80, 81, 82 from the coding employed for each antenna from the mobile broadcast receiver 70.

The reasons for wanting to include a code with an antenna 10, 11, 12 are manifold and include possible faster and simpler operation of the mobile broadcast receiver 70. If the detector 30 can detect a coded input it can forward this information to the antenna selector 40, which then has more information on which to base its selection.

The coding can be carried out for example by inserting a resistor R between the antenna 10 and the input connector 21, inserting a voltage source V between the antenna 11 and the input connector 22 and/or connecting a current source I between the antenna 12 and the input connector 23. The values of the resistor R, the voltage source V and the current source I are coded to have a specific meaning to the antenna selector 40.

Different values of the resistor R for example could be as follows and have the following meanings: R = 10 k Ω and could indicate a passive FM dipole which could be used for antenna diversity for the TV receiver especially in band I to III channels; R = 20 k Ω could for example be an active adhesive laminate antenna which is used for TV reception and means that a preamplifier should be switched off in the RF path; R = 30 k Ω could indicate a passive laminated antenna for TV reception where the preamplifier in the RF path is needed.

The value of the resistor R can also be used to indicate whether the receiver is actually mobile or used in a stationary home environment. If, for example, the resistor R has a value of less than 50 k Ω this could mean that the receiver is used in its mobile mode. If, on the other hand, the value of the resistor R is greater than 50 k Ω this could be used as an indication that the receiver is actually connected to a stationary antenna or even a cable. This might have the implication, for example, that in the home environment diversity is not required as the signal received does not suffer multipath fading.

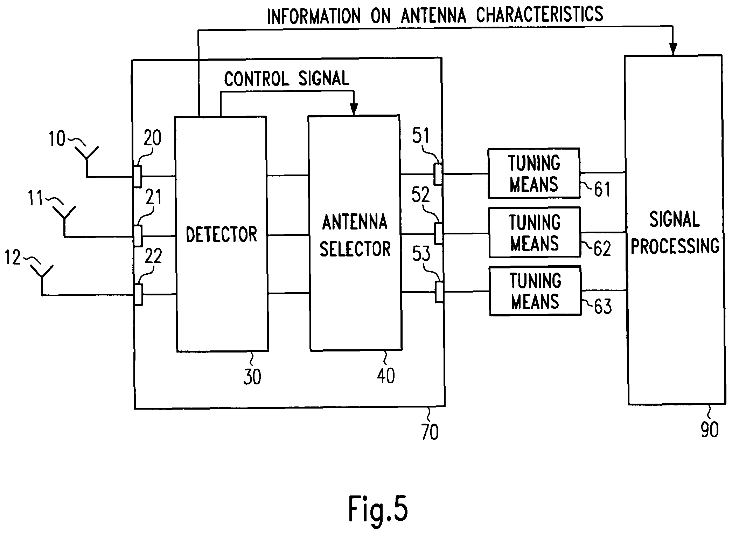

Fig. 5 shows a configuration in which the mobile broadcast receiver 70 can also be used. This is a configuration as would be used for Software Defined Radio (SDR) where the mobile broadcast receiver as described in more detail in Fig. 1 outputs signals through the connectors 51, 52, 53 to tuning means 61, 62 and 63. Then the signal is processed in the signal processing section 90. The tuning means in this case consist of a multi-tuner front end an A/D converter and a software demodulator.

Software Defined Radio means that radio functionality is moved into software and the analog/digital interface is moved closer to the air radio interface at the antenna. One of its advantages is that general purpose hardware can be substituted for dedicated hardware, therefore reducing the production costs.

The term SDR is used to describe radios that provide software controllers for a variety of modulation techniques, wideband or narrowband operation, and waveform requirements and involving standards over a broad frequency range. The frequency bands covered may still be constrained at the front end requiring a switch in the antenna system. SDR enabled user devices can be dynamically programmed in software to reconfigure their characteristics for better performance. SDR offers a solution to accommodate many standards, frequency bands, and applications by offering end user devices that can be programmed, fixed or enhanced by over-the-air software. With SDR a common hardware platform is implemented and different standards and technologies are accommodated by software modules.

Front end processing in SDR consists of the physical air interface, the front end radio frequency processing, and any frequency up and down conversion that is necessary, as well as modulation/demodulation processing. The signal processing section 90 is responsible for the content, information processing for the purpose of decomposition, or recovering the embedded information containing data control and timing.

The mobile broadcast receiver 70 allows a more automatic deployment of the receiving antennas 10, 11, 12. In this case, the information on the antenna characteristics is also sent from the detector 30 to the signal processing section 90 and the control signal is being sent from the detector 30 to the antenna selector 40.

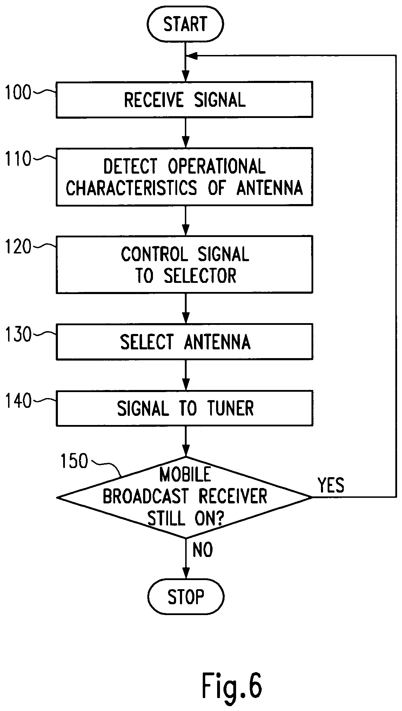

Fig. 6 shows the different steps required in the mobile broadcast receiver in the form of a flow-chart. A broadcast signal is received in step 100 and the operational characteristics of the antenna detected in step 110. A control signal is sent to the selector in step 120, which on the basis of the control signal selects one or more antennas in step 130. The signal is then forwarded to the tuner in step 140. It is then checked whether the mobile broadcast receiver is still switched on in step 150. If it is not, the process is stopped, but if it is still on the whole process is repeated from the reception of the signal in step 100.

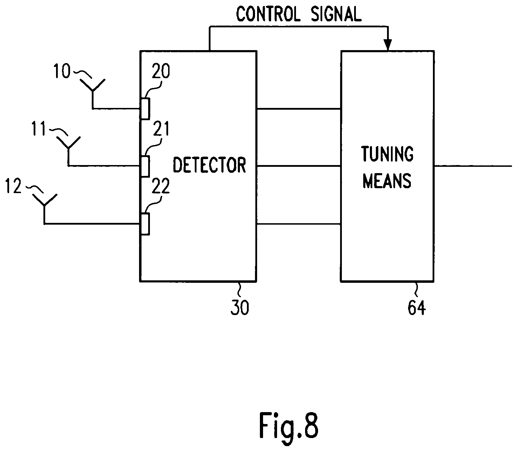

In another embodiment the mobile broadcast receiver is further simplified by incorporating the antenna selector functionality in the tuning means 64. Fig. 8 shows a situation where there is no explicit antenna selector involved. The signal is received by the external diversity antennas 10, 11, 12 and fed into the detector 30 via the input 20, 21, 22. As before the detector 30 determines the antenna characteristics and outputs a control signal. The tuning means 64 receives this control signal and selects the required antenna signal for further signal processing. That means that the antenna selection process occurs within the tuning means 64.

## Claims

1. A mobile broadcast receiver (70) for use in receiving diversity, comprising:
a plurality of antenna connectors (20, 21, 22) for connecting a plurality of external diversity antennas (10, 11, 12) for receiving a plurality of antenna signals,
an antenna selector (40) for selecting at least one of the external diversity antennas (10, 11, 12), a detector (30) for determining external diversity antenna operational characteristics by analysing the plurality of the antenna signals provided at the plurality of antenna connectors (20, 21, 22) and for outputting a control signal based on the defined operational characteristics, wherein the antenna selector (40) is adapted to receive the control signal and to select an antenna signal from the plurality of antenna signals based on the control signal, and
a signal output (50) for outputting the antenna signal selected by the antenna selector (40) to a tuning means (60),
**characterized by**
a multiplexer (35) for receiving the plurality of antenna signals from the plurality of antenna connectors (20, 21, 22) and for multiplexing each of the antenna signals of the plurality of antenna signals before the characteristics are determined in the detector (34).

2. The mobile broadcast receiver (70) of claim 1, wherein the diversity antennas (10, 11, 12) are adapted to provide spatial diversity for the mobile broadcast receiver.

3. The mobile broadcast receiver (70) of claim 1 or 2, wherein the diversity antennas (10, 11, 12) are cross-polarized antennas.

4. The mobile broadcast receiver (70) of any of claims 1 to 3, wherein the diversity antennas (10, 11, 12) are adapted to employ frequency diversity.

5. The mobile broadcast receiver (70) of any of claims 1 to 4, wherein the detector (30) is adapted to determine diversity antenna circuit identifications.

6. The mobile broadcast receiver (70) of any of claims 1 to 5, wherein the detector (30) is further adapted to determine matching circuit characteristics of each of the antenna of the plurality of external diversity antennas (10, 11, 12).

7. The mobile broadcast receiver (70) of any of claims 1 to 6, further comprising an antenna impedance detection unit.

8. The mobile broadcast receiver (70) of any of claims 1 to 7, further comprising an antenna directionality determination unit.

9. The mobile broadcast receiver (70) of any of claims 1 to 8, further comprising a detection unit for determining an antenna frequency bandwidth.

10. The mobile broadcast receiver (70) of any of claims 1 to 9, further comprising a voltage detector representing a value of a resistor (R) in the diversity antenna circuit.

11. The mobile broadcast receiver (70) of any of claims 1 to 10, further comprising a current sensor for determining a current level at the antenna connector.

12. The mobile broadcast receiver (70) of any of claims 1 to 11, further comprising a voltage detector for determining a voltage level at the antenna connector.

13. The mobile broadcast receiver (70) of any of claims 1 to 12, wherein the tuning means (60) is adapted to receive an analogue signal or a digital signal.

14. The mobile broadcast receiver (70) according to claim 13, wherein the tuning means (60) is adapted to receive an FM radio signal, VHF signal or UHF signal.

15. The mobile broadcast receiver (70) according to claim 13, wherein the tuning means (60) is adapted to receive a DAB signal, DVB-H signal or DVB-T signal.

16. The mobile broadcast receiver (70) of any of claims 1 to 15, wherein the tuning means comprises a plurality of tuners (61, 62, 63), each tuner assigned a frequency band.

17. The mobile broadcast receiver (70) of any of claims 1 to 15, wherein the tuning means comprises:
a multi-tuner front-end adapted to serve a plurality of frequency bands,
an analogue-to-digital converter adapted to convert an analogue signal into a digital signal, and
a software demodulator adapted to demodulate the digital signal.

18. The mobile broadcast receiver (70) of any of claims 1 to 17, wherein the tuning means are adapted to optimise the signal processing of the received signal in accordance with the control signal.

19. The mobile broadcast receiver (70) of any of claims 1 to 18, wherein the mobile broadcast receiver is a mobile TV or a radio broadcast receiver.

20. A mobile broadcast system comprising a plurality of external diversity antennas (10, 11, 12), antenna matching circuitry and a receiver according to any of claims 1 to 19.

21. The mobile broadcast system according to claim 20, wherein the antenna matching circuitry includes an amplifier adapted to amplify a signal.

22. The mobile broadcast system according to claim 20 or 21, wherein the antenna matching circuitry includes a resistor (R) for coding a characteristic of the antenna array.

23. The mobile broadcast system according to any of claims 20 to 22, wherein the antenna matching circuitry includes a current source for coding a characteristic of the antenna array.

24. The mobile broadcast system according to any of claims 20 to 23, wherein the antenna matching circuitry includes a voltage source for coding a characteristic of the antenna array.

25. The mobile broadcast system according to any of claims 20 to 24, wherein the plurality of external diversity antennas includes at least one of an FM, VHF, UHF, DAB, DVB-H and DVB-T antenna.

## Patentansprüche

1. Mobiler Übertragungsempfänger (70) zur Verwendung zum Diversitätsempfang, der Folgendes umfasst:
eine Mehrzahl von Antennenanschlüssen (20, 21, 22) zum Verbinden einer Mehrzahl externer Diversitätsantennen (10, 11, 12) zum Empfangen einer Mehrzahl von Antennensignalen,
eine Antennenauswahleinrichtung (40) zum Auswählen mindestens einer der externen Diversitätsantennen (10, 11, 12),
einen Detektor (30) zum Bestimmen von Betriebseigenschaften externer Diversitätsantennen durch Analysieren der Mehrzahl von Antennensignalen, die an der Mehrzahl von Antennenanschlüssen (20, 21, 22) bereitgestellt sind, und zum Ausgeben eines Steuerungssignals auf Grundlage der definierten Betriebseigenschaften,
wobei die Antennenauswahleinrichtung (40) derart angepasst ist, dass sie das Steuerungssignal empfängt und auf Grundlage des Steuerungssignals ein Antennensignal aus der Mehrzahl von Antennensignalen auswählt, und
einen Signalausgang (50) zum Ausgeben des von der Antennenauswahleinrichtung (40) ausgewählten Antennensignals an ein Tuning-Mittel (60),
**gekennzeichnet durch**
einen Multiplexer (35) zum Empfangen der Mehrzahl von Antennensignalen von der Mehrzahl von Antennenanschlüssen (20, 21, 22) und zum Multiplexen jedes der Antennensignale der Mehrzahl von Antennensignale, bevor die Eigenschaften in dem Detektor (34) bestimmt werden.

2. Mobiler Übertragungsempfänger (70) nach Anspruch 1, wobei die Diversitätsantennen (10, 11, 12) derart angepasst sind, dass sie eine räumliche Diversität für den mobilen Rundfunkempfänger bereitstellen.

3. Mobiler Übertragungsempfänger (70) nach Anspruch 1 oder 2, wobei es sich bei den Diversitätsantennen (10, 11, 12) um kreuzpolarisierte Antennen handelt.

4. Mobiler Übertragungsempfänger (70) nach einem der Ansprüche 1 bis 3, wobei die Diversitätsantennen (10, 11, 12) derart angepasst sind, dass sie Frequenzdiversität verwenden.

5. Mobiler Übertragungsempfänger (70) nach einem der Ansprüche 1 bis 4, wobei der Detektor (30) derart angepasst ist, dass er Identifikationen von Diversitätsantennenschaltungen bestimmt.

6. Mobiler Übertragungsempfänger (70) nach einem der Ansprüche 1 bis 5, wobei der Detektor (30) ferner derart angepasst ist, dass er übereinstimmende Schaltungseigenschaften von jeder Antenne aus der Mehrzahl externer Diversitätsantennen (10, 11, 12) bestimmt.

7. Mobiler Übertragungsempfänger (70) nach einem der Ansprüche 1 bis 6, ferner eine Einheit zur Detektion der Antennenimpedanz umfassend.

8. Mobiler Übertragungsempfänger (70) nach einem der Ansprüche 1 bis 7, ferner eine Einheit zum Bestimmen der Antennendirektionalität umfassend.

9. Mobiler Übertragungsempfänger (70) nach einem der Ansprüche 1 bis 8, ferner eine Detektionseinheit zum Bestimmen einen Antennenfrequenzbandbreite umfassend.

10. Mobiler Übertragungsempfänger (70) nach einem der Ansprüche 1 bis 9, ferner einen Spannungsdetektor umfassend, der einen Wert eines Widerstandes (R) in der Diversitätsantennenschaltung darstellt.

11. Mobiler Übertragungsempfänger (70) nach einem der Ansprüche 1 bis 10, ferner einen Stromsensor zum Bestimmen eines Strompegels an dem Antennenanschluss umfassend.

12. Mobiler Übertragungsempfänger (70) nach einem der Ansprüche 1 bis 11, ferner einen Spannungsdetektor zum Bestimmen eines Spannungspegels an dem Antennenanschluss umfassend.

13. Mobiler Übertragungsempfänger (70) nach einem der Ansprüche 1 bis 12, wobei das Tuning-Mittel (60) derart angepasst ist, dass es ein analoges Signal oder ein digitales Signal empfängt.

14. Mobiler Übertragungsempfänger (70) nach Anspruch 13, wobei das Tuning-Mittel (16) derart angepasst ist, dass es ein FM-Funksignal, VHF-Signal oder UHF-Signal empfängt.

15. Mobiler Übertragungsempfänger (70) nach Anspruch 13, wobei das Tuning-Mittel (60) derart angepasst ist, dass es ein DAB-Signal, DVB-H-Signal oder DVB-T-Signal empfängt.

16. Mobiler Übertragungsempfänger (70) nach einem der Ansprüche 1 bis 15, wobei das Tuning-Mittel eine Mehrzahl von Tunern (61, 62, 63) umfasst, wobei jeder Tuner einem Frequenzband zugeordnet ist.

17. Mobiler Übertragungsempfänger (70) nach einem der Ansprüche 1 bis 15, wobei das Tuning-Mittel Folgendes umfasst:
ein Mehr-Tuner-Front-End, das derart angepasst ist, dass es einer Mehrzahl von Frequenzbändern dient,
einen Analog-Digital-Wandler, der derart angepasst ist, dass er ein analoges Signal in ein digitales Signal umwandelt, und
einen Software-Demodulator, der derart angepasst ist, dass er das digitale Signal demoduliert.

18. Mobiler Übertragungsempfänger (70) nach einem der Ansprüche 1 bis 17, wobei das Tuning-Mittel derart angepasst ist, dass es die Signalverarbeitung des empfangenen Signals entsprechend dem Steuerungssignal optimiert.

19. Mobiler Übertragungsempfänger (70) nach einem der Ansprüche 1 bis 18, wobei es sich bei dem mobilen Übertragungsempfänger um einen TV- oder einen Rundfunkübertragungsempfänger handelt.

20. Mobiler Übertragungsempfänger, der eine Mehrzahl externer Diversitätsantennen (10, 11, 12), eine Antennenanpassungsschaltung und einen Empfänger nach einem der Ansprüche 1 bis 19 umfasst.

21. Mobiler Übertragungsempfänger nach Anspruch 20, wobei die Antennenanpassungsschaltung einen zum Verstärken eines Signals angepassten Verstärker umfasst.

22. Mobiler Übertragungsempfänger nach einem der Ansprüche 20 oder 21, wobei die Antennenanpassungsschaltung einen Widerstand (R) zum Codieren einer Eigenschaft der Antennengruppe umfasst.

23. Mobiler Übertragungsempfänger nach einem der Ansprüche 20 bis 22, wobei die Antennenanpassungsschaltung eine Stromquelle zum Codieren einer Eigenschaft der Antennengruppe umfasst.

24. Mobiler Übertragungsempfänger nach einem der Ansprüche 20 bis 23, wobei die Antennenanpassungsschaltung eine Spannungsquelle zum Codieren einer Eigenschaft der Antennengruppe umfasst.

25. Mobiler Übertragungsempfänger nach einem der Ansprüche 20 bis 24, wobei die Mehrzahl externer Diversitätsantennen mindestens eine von einer FM-, VHF-, UHF-, DAB-, DVB-H- und DVB-T-Antenne umfasst.

## Revendications

1. Récepteur de diffusion mobile (70) pour une utilisation dans la réception en diversité, comprenant :
une pluralité de connecteurs d'antenne (20, 21, 22) pour connecter une pluralité d'antennes externes de diversité (10, 11, 12) afin de recevoir une pluralité de signaux d'antenne,
un sélecteur d'antenne (40) pour sélectionner au moins une des antennes externes de diversité (10, 11, 12), un détecteur (30) pour déterminer des caractéristiques opérationnelles d'antenne externe de diversité par l'analyse de la pluralité des signaux d'antenne fournis au niveau de la pluralité de connecteurs d'antenne (20, 21, 22) et pour émettre en sortie un signal de commande sur la base des caractéristiques opérationnelles définies,
dans lequel le sélecteur d'antenne (40) est adapté pour recevoir le signal de commande et pour sélectionner un signal d'antenne à partir de la pluralité de signaux d'antenne sur la base du signal de commande, et
une sortie de signal (50) pour émettre en sortie le signal d'antenne sélectionné par le sélecteur d'antenne (40) vers un moyen de syntonisation (60),
**caractérisé par**
un multiplexeur (35) pour recevoir la pluralité de signaux d'antenne de la pluralité de connecteurs d'antenne (20, 21, 22) et pour multiplexer chacun des signaux d'antenne de la pluralité de signaux d'antenne avant que les caractéristiques soient déterminées dans le détecteur (34).

2. Récepteur de diffusion mobile (70) selon la revendication 1, dans lequel les antennes de diversité (10, 11, 12) sont adaptées pour fournir une diversité spatiale pour le récepteur de diffusion mobile.

3. Récepteur de diffusion mobile (70) selon la revendication 1 ou 2, dans lequel les antennes de diversité (10, 11, 12) sont des antennes à polarisation orthogonale.

4. Récepteur de diffusion mobile (70) selon l'une quelconque des revendications 1 à 3, dans lequel les antennes de diversité (10, 11, 12) sont adaptées pour employer une diversité de fréquence.

5. Récepteur de diffusion mobile (70) selon l'une quelconque des revendications 1 à 4, dans lequel le détecteur (30) est adapté pour déterminer des identifications de circuit d'antenne de diversité.

6. Récepteur de diffusion mobile (70) selon l'une quelconque des revendications 1 à 5, dans lequel le détecteur (30) est en outre adapté pour déterminer des caractéristiques de circuit d'adaptation pour chacune des antennes de la pluralité d'antennes externes de diversité (10, 11, 12).

7. Récepteur de diffusion mobile (70) selon l'une quelconque des revendications 1 à 6, comprenant en outre une unité de détection d'impédance d'antenne.

8. Récepteur de diffusion mobile (70) selon l'une quelconque des revendications 1 à 7, comprenant en outre une unité de détermination de directivité d'antenne.

9. Récepteur de diffusion mobile (70) selon l'une quelconque des revendications 1 à 8, comprenant en outre une unité de détection pour déterminer une largeur de bande de fréquence d'antenne.

10. Récepteur de diffusion mobile (70) selon l'une quelconque des revendications 1 à 9, comprenant en outre un détecteur de tension représentant une valeur d'une résistance (R) dans le circuit d'antenne de diversité.

11. Récepteur de diffusion mobile (70) selon l'une quelconque des revendications 1 à 10, comprenant en outre un capteur de courant pour déterminer un niveau de courant au niveau du connecteur d'antenne.

12. Récepteur de diffusion mobile (70) selon l'une quelconque des revendications 1 à 11, comprenant en outre un détecteur de tension pour déterminer un niveau de tension au niveau du connecteur d'antenne.

13. Récepteur de diffusion mobile (70) selon l'une quelconque des revendications 1 à 12, dans lequel le moyen de syntonisation (60) est adapté pour recevoir un signal analogique ou un signal numérique.

14. Récepteur de diffusion mobile (70) selon la revendication 13, dans lequel le moyen de syntonisation (60) est adapté pour recevoir un signal radio FM, un signal VHF ou un signal UHF.

15. Récepteur de diffusion mobile (70) selon la revendication 13, dans lequel le moyen de syntonisation (60) est adapté pour recevoir un signal de diffusion audionumérique, un signal de diffusion vidéonumérique mobile ou un signal de diffusion vidéonumérique terrestre.

16. Récepteur de diffusion mobile (70) selon l'une quelconque des revendications 1 à 15, dans lequel le moyen de syntonisation comprend une pluralité de syntoniseurs (61, 62, 63), une bande de fréquences étant assignée à chaque syntoniseur.

17. Récepteur de diffusion mobile (70) selon l'une quelconque des revendications 1 à 15, dans lequel le moyen de syntonisation comprend :
une tête de réception de multi-syntoniseur adaptée pour servir une pluralité de bandes de fréquences,
un convertisseur analogique/numérique adapté pour convertir un signal analogique en un signal numérique, et
un démodulateur logiciel adapté pour démoduler le signal numérique.

18. Récepteur de diffusion mobile (70) selon l'une quelconque des revendications 1 à 17, dans lequel le moyen de syntonisation est adapté pour optimiser le traitement de signal du signal reçu conformément au signal de commande.

19. Récepteur de diffusion mobile (70) selon l'une quelconque des revendications 1 à 18, dans lequel le récepteur de diffusion mobile est un récepteur mobile de télédiffusion ou de radiodiffusion.

20. Système de diffusion mobile comprenant une pluralité d'antennes externes de diversité (10, 11, 12), un circuit d'adaptation d'antenne et un récepteur selon l'une quelconque des revendications 1 à 19.

21. Système de diffusion mobile selon la revendication 20, dans lequel le circuit d'adaptation d'antenne comprend un amplificateur adapté pour amplifier un signal.

22. Système de diffusion mobile selon la revendication 20 ou 21, dans lequel le circuit d'adaptation d'antenne comprend une résistance (R) pour coder une caractéristique du réseau d'antennes.

23. Système de diffusion mobile selon l'une quelconque des revendications 20 à 22, dans lequel le circuit d'adaptation d'antenne comprend une source de courant pour coder une caractéristique du réseau d'antennes.

24. Système de diffusion mobile selon l'une quelconque des revendications 20 à 23, dans lequel le circuit d'adaptation d'antenne comprend une source de tension pour coder une caractéristique du réseau d'antennes.

25. Système de diffusion mobile selon l'une quelconque des revendications 20 à 24, dans lequel la pluralité d'antennes externes de diversité comprend au moins l'une d'entre une antenne FM, VHF, UHF, de diffusion audionumérique, de diffusion vidéonumérique mobile ou de diffusion vidéonumérique terrestre.
